# EUROPEAN PATENT APPLICATION

(11) **EP 4 848 688 A1**
(43) Date of publication of application: **02.12.2026**
(21) Application number: 24925521.7
(22) Date of filing: 09.10.2024
(51) Int. Cl.: H04L 49/111

(54) **CLUSTER INTERFACE BOARD CARD, SERVICE FORWARDING DEVICE, SERVICE FORWARDING METHOD, AND CLUSTER SYSTEM**

(30) Priority: 22.02.2024 CN 202410199363
(71) Applicant: Huawei Technologies Co., Ltd., Shenzhen, Guangdong 518129 (CN)
(72) Inventor: ZHANG, Wei, Shenzhen, Guangdong 518129 (CN); CHANG, Shifan, Shenzhen, Guangdong 518129 (CN); ZHANG, Wenzhuo, Shenzhen, Guangdong 518129 (CN)
(74) Representative: Goddar, Heinz J.
(86) International application number: PCT/CN2024/123750
(87) International publication number: WO 2025/175783

(57) **Abstract**

Embodiments provide a cluster interface card, a service forwarding device, a service forwarding method, and a cluster system. The cluster interface card includes a forwarding switching chip, a plurality of first serializer/deserializer interfaces, and a plurality of second serializer/deserializer interfaces. The forwarding switching chip is separately connected to the plurality of first serializer/deserializer interfaces and the plurality of second serializer/deserializer interfaces. The plurality of first serializer/deserializer interfaces are configured to be in communication connection to a service switching card, and the plurality of second serializer/deserializer interfaces are configured to be in communication connection to a target communication device. The forwarding switching chip is configured to: input service data through any one of a plurality of input serializer/deserializer interfaces, and select at least one of a plurality of output serializer/deserializer interfaces to output the service data. By introducing the cluster interface card, embodiments of this application can enhance the heat dissipation performance of the service forwarding device and improve flexibility in component design.

## Description

This application claims priority to Chinese Patent Application No. 202410199363.6, filed with the China National Intellectual Property Administration on February 22, 2024 and entitled "CLUSTER INTERFACE CARD, SERVICE FORWARDING DEVICE, SERVICE FORWARDING METHOD, AND CLUSTER SYSTEM", which is incorporated herein by reference in its entirety.

### TECHNICAL FIELD

This application relates to the field of data communication technologies, and in particular, to a cluster interface card, a service forwarding device, a service forwarding method, and a cluster system.

### BACKGROUND

In the communication field, standalone service forwarding devices (for example, routers and servers) may implement data exchange between different network nodes. With the development of communication technologies, the amount of data exchanged between network nodes has grown explosively. To meet increasing communication requirements, a cluster (cluster) system may be constructed based on a plurality of service forwarding devices.

In such a cluster system, each service forwarding device may be equipped with a plurality of service switching cards, and each service switching card includes a plurality of service switching fabrics and a plurality of cluster modules (for example, optical modules or electrical modules). A service switching fabric in each service forwarding device establishes direct or indirect data exchange connections with a service switching fabric in another service forwarding device through corresponding cluster modules and cables (for example, optical fibers or electrical cables). In this way, a plurality of service forwarding devices can be combined into a larger service forwarding networking system (namely, a cluster system) to meet higher communication requirements. However, in each service forwarding device, each service switching card requires a large quantity of cluster modules. The large quantity of cluster modules and their cable layouts affect the layout design and function design of functional components of the service forwarding device. For example, the cluster modules and their cable layouts greatly occupy area overheads of the service switching card. Consequently, the switching capacity that can be deployed on the service forwarding device is reduced, the heat dissipation layout of the device is affected, and the like.

### SUMMARY

Embodiments of this application provide a cluster interface card, a service forwarding device, a service forwarding method, and a cluster system, to improve design flexibility of a service forwarding device in a cluster system.

To achieve the foregoing objectives, the following technical solutions are used in embodiments of this application.

According to a first aspect, a cluster interface card is provided, including a forwarding switching chip, a plurality of first serializer/deserializer interfaces, and a plurality of second serializer/deserializer interfaces. The forwarding switching chip is separately connected to the plurality of first serializer/deserializer interfaces and the plurality of second serializer/deserializer interfaces. The plurality of first serializer/deserializer interfaces are configured to be in communication connection to a service switching card. The plurality of second serializer/deserializer interfaces are configured to be in communication connection to a target communication device. The forwarding switching chip is configured to: input first service data through any one of the plurality of first serializer/deserializer interfaces, and select at least one of the plurality of second serializer/deserializer interfaces to output the first service data; or input second service data through any one of the plurality of second serializer/deserializer interfaces, and select at least one of the plurality of first serializer/deserializer interfaces to output the second service data.

In this embodiment of this application, the cluster interface card is disposed, so that an interface layout in the service forwarding device can be more reasonable and compact. In addition, the cluster interface card is used to implement connection to a cluster module, and there is no need to design a related interface and cluster module on the service switching card, so that an interaction capacity of the service forwarding device can be improved, layout designability of the service switching card can be improved, and impact of the cluster module on heat dissipation of the service switching card can be reduced. In addition, based on the cluster interface card, the cluster module and the like may be disposed outside the service forwarding device in a pluggable form, to avoid occupation of area overheads inside the service forwarding device by the cluster module and a cable of the cluster module that are designed based on a cluster application. However, in this application, the first serializer/deserializer interface and the second serializer/deserializer interface of the cluster interface card need to be correspondingly connected, and there is a strict requirement limitation on a quantity of lanes, a quantity of transmissions, and the like. Consequently, designability of a solution of the service forwarding device. On this basis, a forwarding switching chip may be disposed in the cluster interface card. The forwarding switching chip may select different serializer/deserializer interfaces to allocate, transmit, and output input data, so that based on the forwarding switching chip, decoupling of a one-to-one correspondence between the first serializer/deserializer interface and the second serializer/deserializer interface may be implemented. Therefore, designability of the cluster interface card and the service forwarding device is improved.

In a possible implementation, the cluster interface card is further configured to: in response to a fault of a target service switching card, isolate a target first serializer/deserializer interface, where the target first serializer/deserializer interface is a serializer/deserializer interface in the plurality of first serializer/deserializer interfaces that is in communication connection to a faulty port of the target service switching card. In this embodiment of this application, service data input through one serializer/deserializer to the cluster interface card may be selected and allocated to one or more serializer/deserializer interfaces for output. In this case, a one-to-one correspondence between an input serializer/deserializer interface and an output serializer/deserializer interface is decoupled, so that a design of the cluster interface card is more flexible. In addition, because there is no one-to-one correspondence between the input serializer/deserializer interface and the output serializer/deserializer interface, when a specific service switching fabric in a service switching card is faulty, only a first serializer/deserializer interface connected to a faulty port of the service switching card needs to be isolated. A fault of the service switching fabric can only affect normal working of a corresponding connected first serializer/deserializer interface, and does not affect normal working of a second serializer/deserializer interface and a downstream component thereof, to effectively implement fault isolation.

In a possible implementation, selecting the at least one of the plurality of second serializer/deserializer interfaces to output the first service data includes: selecting the at least one of the plurality of second serializer/deserializer interfaces to output the first service data, where when two or more serializer/deserializer interfaces are selected to transmit the first service data, a difference between target data amounts transmitted by any two selected second serializer/deserializer interfaces is less than a preset threshold, and the target data amount is an amount of the first service data transmitted through each selected second serializer/deserializer interface. In this embodiment of this application, when transmitting the first service data, the forwarding switching chip may transmit the first service data in a load balance (load balance) manner. For example, the first service data obtained from one first serializer/deserializer interface may be evenly allocated to one or more second serializer/deserializer interfaces, and transmitted to one or more corresponding cluster switching fabrics. Similarly, in this implementation, a corresponding quantity of second serializer/deserializer interfaces may be selected based on a load size such as an amount of the transmitted first service data to perform load balance transmission.

In a possible implementation, the cluster interface card is specifically configured to: select the at least one first serializer/deserializer interface or the at least one second serializer/deserializer interface based on target information, where the target information includes at least one or more of the following: a data flow type of service data, an effective bandwidth of a current service, and a service type and a service priority of the service data. In this embodiment of this application, based on different product designs, application scenarios, and the like, the at least one first serializer/deserializer interface and the at least one second serializer/deserializer interface may be selected based on different target information.

In a possible implementation, the cluster interface card is further configured to: disable a serializer/deserializer interface that is not selected in the plurality of first serializer/deserializer interfaces and/or the plurality of second serializer/deserializer interfaces. In this embodiment of this application, the forwarding switching chip may select, according to a specific rule, the output serializer/deserializer interface. In this case, the serializer/deserializer interface that violates serialization may be disabled, to reduce power consumption, heat dissipation, and the like.

In a possible implementation, a quantity of physical link buses of the second serializer/deserializer interface is greater than a quantity of physical link buses of the first serializer/deserializer interface. Outputting the first service data through the at least one of the plurality of second serializer/deserializer interfaces further includes: outputting the first service data based on a part of physical link buses of the at least one second serializer/deserializer interface; and in response to a fault of a target physical link bus in the part of physical link buses of the second serializer/deserializer interface, isolating the target physical link bus, and switching to an unused physical link bus of the second serializer/deserializer interface to output the first service data. In this embodiment of this application, the quantity of lanes of the second serializer/deserializer interface may be set to be greater than the quantity of lanes of the first serializer/deserializer interface. In this case, a part of lanes of the second serializer/deserializer interface may be used as redundant alternative lanes. The first service data may be transmitted based on the part of lanes of the second serializer/deserializer interface. When a specific target lane in the part of lanes for data transmission is faulty, a redundant alternative lane may be switched to, to replace the part of target lanes. In this implementation, a lane-level fault tolerance rate of the service forwarding device can be improved.

In a possible implementation, the cluster interface card is further configured to: output cluster parameter information, where the cluster parameter information includes at least one of the following: time information, clock information, and frame header information of a cluster in which the cluster interface card is located. In this embodiment of this application, the cluster parameter information such as the time information, the clock information, and the frame header information may be transmitted over a data link for data transmission in the in-band transmission manner. In this case, the cluster interface card may extract management information from service data for forwarding communication, and upload the management information to the service interaction board controller. In this implementation, interfaces, cables, and the like used for management information transmission do not need to be additionally designed, and a layout area on a PCB board can be reduced, so that a layout of the PCB board can be better designed. In addition, problems of heat dissipation interference and costs caused by these interfaces and cables can be reduced.

In a possible implementation, a data transmission rate of the first serializer/deserializer interface is greater than or equal to a data transmission rate of the second serializer/deserializer interface. In this embodiment of this application, based on the forwarding switching chip, transmission rates of the input serializer/deserializer interface and the output serializer/deserializer interface may not be limited. The first serializer/deserializer interface and the second serializer/deserializer interface may have different transmission rates.

In some examples, the data transmission rate of the first serializer/deserializer interface is a first multiple of the data transmission rate of the second serializer/deserializer interface, and the quantity of physical link buses of the second serializer/deserializer interface is less than or equal to the first multiple of the quantity of physical link buses of the first serializer/deserializer interface. In this embodiment of this application, in this setting manner, a cluster capacity in a module with higher costs can be implemented based on a module with low costs. For example, a same cluster capacity under an 800G module can be implemented through a 400G module, thereby improving design flexibility of a cluster system.

In a possible implementation, a data transmission rate of each second serializer/deserializer interface is 53.125 Gbit/s. In this embodiment of this application, the second serializer/deserializer interface is an interface used by the service forwarding device to be in communication connection to another external target communication device. To ensure universality and adaptation of the service forwarding device, the transmission rate of the second serializer/deserializer interface may be set at a standard Ethernet frequency, namely, 53.125 Gbit/s.

For example, the first serializer/deserializer interface includes eight lanes and the transmission rate of the first serializer/deserializer interface is 58.125 Gbit/s; and the second serializer/deserializer interface includes eight lanes and the transmission rate of the second serializer/deserializer interface is 53.125 Gbit/s. In this embodiment of this application, the second serializer/deserializer interface works at a standardized rate, and the first serializer/deserializer interface is an interface inside the service forwarding device 100B, and may work at a non-standardized rate, so that service availability of the service forwarding device is improved when costs are reduced.

According to a second aspect, an embodiment of this application provides a service forwarding device. The service forwarding device includes a plurality of service switching cards and a plurality of cluster interface cards. Each service switching card includes a plurality of service switching fabrics. Each cluster interface card includes a forwarding switching chip, a plurality of first serializer/deserializer interfaces, and a plurality of second serializer/deserializer interfaces. The forwarding switching chip is separately connected to the plurality of corresponding first serializer/deserializer interfaces and the plurality of corresponding second serializer/deserializer interfaces. Each first serializer/deserializer interface is connected to one service switching fabric in one service switching card. Each service switching fabric is connected to the first serializer/deserializer interface of at least one cluster interface card. The plurality of second serializer/deserializer interfaces are configured to be in communication connection to a target communication device. Each forwarding switching chip is configured to: input first service data from a corresponding service switching fabric through any one of the plurality of first serializer/deserializer interfaces, and select at least one of the plurality of corresponding second serializer/deserializer interfaces to send the first service data to the target communication device; or receive, from any one of the plurality of corresponding second serializer/deserializer interfaces, second service data sent by the target communication device, and select at least one of the plurality of first serializer/deserializer interfaces to output the second service data.

In a possible implementation, each cluster interface card is further configured to: in response to a fault of a target service switching fabric in a target service switching card, isolate a target first serializer/deserializer interface, where the target first serializer/deserializer interface is a serializer/deserializer interface in the plurality of first serializer/deserializer interfaces that is in communication connection to the target service switching fabric.

In a possible implementation, selecting the at least one of the plurality of second serializer/deserializer interfaces to output the first service data includes: selecting the at least one of the plurality of second serializer/deserializer interfaces to output the first service data, where when two or more serializer/deserializer interfaces are selected to transmit the first service data, a difference between target data amounts transmitted by any two selected second serializer/deserializer interfaces is less than a preset threshold, and the target data amount is an amount of the first service data transmitted through each selected second serializer/deserializer interface.

In a possible implementation, the cluster interface card is specifically configured to: select the at least one first serializer/deserializer interface or the at least one second serializer/deserializer interface based on target information, where the target information includes at least one or more of the following: a data flow type of service data, an effective bandwidth of a current service, and a service type and a service priority of the service data.

In a possible implementation, the cluster interface card is further configured to: disable a serializer/deserializer interface that is not selected in the plurality of first serializer/deserializer interfaces and/or the plurality of second serializer/deserializer interfaces.

In a possible implementation, a quantity of physical link buses of the second serializer/deserializer interface is greater than a quantity of physical link buses of the first serializer/deserializer interface. Outputting the first service data through the at least one of the plurality of second serializer/deserializer interfaces further includes: outputting the first service data based on a part of physical link buses of the at least one second serializer/deserializer interface; and in response to a fault of a target physical link bus in the part of physical link buses of the second serializer/deserializer interface, isolating the target physical link bus, and switching to an unused physical link bus of the second serializer/deserializer interface to output the first service data.

In a possible implementation, the service forwarding device further includes a service interaction board controller. The cluster interface card is further configured to: output cluster parameter information to the service interaction board controller, where the cluster parameter information includes at least one of the following: time information, clock information, and frame header information of a cluster in which the cluster interface card is located.

According to a third aspect, an embodiment of this application further provides a service forwarding method. The method is applied to a cluster interface card. The cluster interface card includes a plurality of first serializer/deserializer interfaces and a plurality of second serializer/deserializer interfaces. The plurality of first serializer/deserializer interfaces are configured to be in communication connection to a service switching card. The plurality of second serializer/deserializer interfaces are configured to be in communication connection to a target communication device. The method includes: inputting first service data through any one of the plurality of first serializer/deserializer interfaces, and select at least one of the plurality of second serializer/deserializer interfaces to output the first service data; or inputting second service data through any one of the plurality of second serializer/deserializer interfaces, and selecting at least one of the plurality of first serializer/deserializer interfaces to output the second service data.

In a possible implementation, the method further includes: in response to a fault of a target service switching card, isolating a target first serializer/deserializer interface, where the target first serializer/deserializer interface is an interface in the plurality of first serializer/deserializer interfaces that is in communication connection to a faulty port of the target service switching card.

In a possible implementation, selecting the at least one of the plurality of second serializer/deserializer interfaces to output the first service data includes: selecting the at least one of the plurality of second serializer/deserializer interfaces to output the first service data, where when two or more serializer/deserializer interfaces are selected to transmit the first service data, a difference between target data amounts transmitted by any two selected second serializer/deserializer interfaces is less than a specific threshold, and the target data amount is an amount of the first service data transmitted through each selected second serializer/deserializer interface.

In a possible implementation, the selection operation includes: selecting the at least one first serializer/deserializer interface or the at least one second serializer/deserializer interface based on target information, where the target information includes at least one or more of the following: a data flow type of service data, an effective bandwidth of a current service, and a service type and a service priority of the service data.

In a possible implementation, the method further includes: disabling a serializer/deserializer interface that is not selected in the plurality of first serializer/deserializer interfaces and/or the plurality of second serializer/deserializer interfaces.

In a possible implementation, a quantity of physical link buses of the second serializer/deserializer interface is greater than a quantity of physical link buses of the first serializer/deserializer interface. Outputting the first service data through the at least one of the plurality of second serializer/deserializer interfaces further includes: outputting the first service data based on a part of physical link buses of the at least one second serializer/deserializer interface; and in response to a fault of a target physical link bus in the part of physical link buses of the second serializer/deserializer interface, isolating the target physical link bus, and switching to an unused physical link bus of the second serializer/deserializer interface to output the first service data.

In a possible implementation, the method further includes: outputting cluster parameter information, where the cluster parameter information includes at least one of the following: time information, clock information, and frame header information of a cluster in which the cluster interface card is located.

According to a fourth aspect, an embodiment of this application further provides a cluster system. The cluster system includes a cluster switching device and a service forwarding device. The cluster switching device includes a plurality of central cluster switching boards, and each central cluster switching board includes a plurality of cluster switching fabrics. The service forwarding device includes a plurality of service switching cards and a plurality of cluster interface cards, and each service switching card includes a plurality of service switching fabrics. Each cluster interface card includes a forwarding switching chip, a plurality of first serializer/deserializer interfaces, and a plurality of second serializer/deserializer interfaces. Each forwarding switching chip is separately connected to a plurality of corresponding first serializer/deserializer interfaces and a plurality of corresponding second serializer/deserializer interfaces. Each first serializer/deserializer interface is connected to one service switching fabric in one service switching card. Each service switching fabric is connected to the first serializer/deserializer interface of at least one cluster interface card. The plurality of second serializer/deserializer interfaces of each cluster interface card are in communication connection to the cluster switching fabric in one or more central cluster switching boards through a cluster interface module. Each forwarding switching chip is configured to: input first service data from a corresponding service switching fabric through any one of the plurality of first serializer/deserializer interfaces, and select at least one of the plurality of second serializer/deserializer interfaces to output the first service data to the corresponding central cluster switching board; or input second service data through any one of the plurality of second serializer/deserializer interfaces, and select at least one of the plurality of first serializer/deserializer interfaces to output the second service data to a corresponding service switching fabric.

According to a fifth aspect, an embodiment of this application further provides a cluster system. The cluster system includes a target communication device and a service forwarding device, and the service forwarding device includes a plurality of service switching cards and a plurality of cluster interface cards. The plurality of cluster interface cards are respectively connected to the plurality of service switching cards and the target communication device. One or more of the plurality of cluster interface cards are the cluster interface cards recorded in the first aspect.

According to a sixth aspect, an embodiment of this application further provides a computer-readable storage medium. The computer-readable storage medium includes instructions. When the instructions are run on a processor, the processor is caused to perform the service forwarding method recorded in the third aspect.

For technical principles and beneficial effects of the second aspect, the third aspect, the fourth aspect, the fifth aspect, and the sixth aspect, refer to related descriptions in the first aspect. Details are not described again.

### BRIEF DESCRIPTION OF DRAWINGS

FIG. 1 is a diagram of structures of cluster systems of different application architectures according to an embodiment of this application;
FIG. 2 is a diagram of a structure of a first service forwarding device according to an embodiment of this application;
FIG. 3 is a diagram 1 of a structure of a second service forwarding device according to an embodiment of this application;
FIG. 4 is a diagram 2 of a structure of a second service forwarding device according to an embodiment of this application;
FIG. 5 is a diagram 3 of a structure of a second service forwarding device according to an embodiment of this application;
FIG. 6 is a diagram 4 of a structure of a second service forwarding device according to an embodiment of this application;
FIG. 7 is a diagram 5 of a structure of a second service forwarding device according to an embodiment of this application;
FIG. 8 is a diagram 6 of a structure of a second service forwarding device according to an embodiment of this application;
FIG. 9 is a diagram 7 of a structure of a second service forwarding device according to an embodiment of this application;
FIG. 10 is a diagram 8 of a structure of a second service forwarding device according to an embodiment of this application;
FIG. 11 is a diagram 9 of a structure of a second service forwarding device according to an embodiment of this application;
FIG. 12 is a schematic flowchart 1 of a service forwarding method according to an embodiment of this application;
FIG. 13 is a schematic flowchart 2 of a service forwarding method according to an embodiment of this application; and
FIG. 14 is a schematic flowchart 3 of a service forwarding method according to an embodiment of this application.

### DESCRIPTION OF EMBODIMENTS

It should be noted that terms such as "first" and "second" in embodiments of this application are merely used to distinguish between features of a same type, and cannot be understood as an indication of relative importance, a quantity, a sequence, or the like.

The term "example", "for example", or the like in embodiments of this application is used to represent an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The terms "coupling" and "connection" in embodiments of this application should be understood in a broad sense. For example, the "connection" may be a physical direct connection, or may be an indirect connection implemented through an electronic component, for example, a connection implemented through a resistor, an inductor, a capacitor, or another electronic component.

First, some basic concepts in embodiments of this application are explained and described.

A serializer/deserializer (serializer/deserializer, SerDes) technology is a technology used to convert serial data into parallel data (serialized data) or convert parallel data into serial data (deserialized data). The technology is usually applied to the field of high-speed data transmission and communication. Bidirectional communication may be performed between different modules, interfaces, devices, or circuits based on the SerDes technology. A serializer/deserializer (SerDes) interface or module may include a receiving module, a sending module, a clock-related module, and the like. A serializer (serializer) is also referred to as a transmit end (Tx), and a deserializer (deserializer) is also referred to as a receive end Rx. The serializer that performs a sending function can convert a parallel signal into a serial signal for sending. The deserializer that performs a receiving function may convert a received serial signal into a parallel signal. Usually, one serializer/deserializer interface may include a plurality of parallel physical link buses (lanes), which means that the serializer/deserializer interface has a plurality of parallel data channels, and each data channel may transmit one data bit. For example, one serializer/deserializer includes eight lanes, which indicates that the serializer/deserializer has eight parallel data channels, and eight data bits can be simultaneously transmitted. In this manner, a bandwidth, a speed, and the like of data transmission can be improved.

In the SerDes technology, service interaction may be implemented based on data flows of a plurality of lanes. A data flow is a data sequence that is continuously transmitted in a period of time. The data flow may include a plurality of data packets (packets) or a plurality of cells (cells). The data packet is a basic unit in network communication, and is a part of data transmitted over a network. The data packet usually contains information such as a source address, a destination address, a protocol type, and a data length. The data packet is transmitted over the network, forwarded by devices such as routers, and finally arrives at the destination address. The cell is a data transmission unit used in an asynchronous transfer mode (asynchronous transfer mode, ATM). The cell contains fields such as a virtual channel identifier (virtual channel identifier, VCI), a virtual path identifier (virtual path identifier, VPI), and a payload. Data transmission in an ATM network is based on the cell. The cell has a fixed length, usually 53 bytes, and may include a 5-byte packet header and a 48-byte payload.

In the communication field, standalone service forwarding devices (for example, routers and servers) may implement data exchange between different network nodes. With the development of communication technologies, the amount of data exchanged between network nodes has grown explosively. To meet increasing communication requirements, one solution is to increase a service component capacity and an interaction port density of a single service forwarding device. However, limited by technology development, improvement of the service component capacity and the interaction port density of the single service forwarding device is obviously limited. Another solution is to construct a cluster (cluster) system based on a plurality of service forwarding devices.

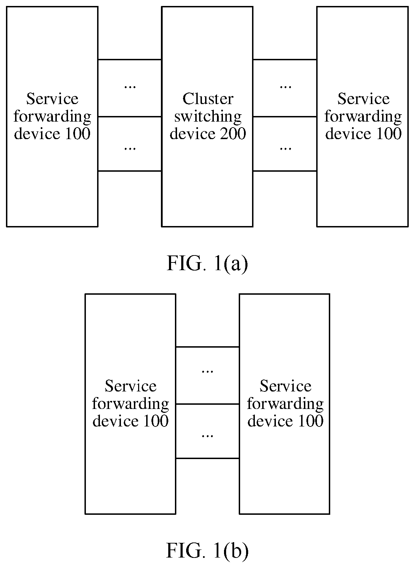

FIG. 1(a) is an example of a diagram of a hardware architecture of a cluster system. As shown in FIG. 1(a), the cluster system may include a plurality of service forwarding devices 100 and a cluster switching device 200. Each service forwarding device 100 is connected to the cluster switching device 200 through a cable (for example, an optical fiber or an electrical cable), to implement a communication connection among the plurality of service forwarding devices through the cluster switching device 200, to meet higher communication requirements. For example, the service forwarding device 100 may be a cluster line-card chassis (cluster line-card chassis, CLC), and the cluster switching device 200 may be a cluster center chassis (cluster center chassis, CCC). In FIG. 1(a), an example in which one cluster switching device 200 is separately connected to two service forwarding devices 100 is used for description, and this architecture is referred to as a "one-to-two architecture" in the industry. In actual application, M cluster switching devices 200 and N service forwarding devices 100 may be set, and a communication connection among the N service forwarding devices 100 is implemented through the M cluster switching devices 200. This architecture may be referred to as an "M-to-N architecture" in the industry. N and M may be adaptively designed based on an actual networking requirement.

FIG. 1(b) is an example of a diagram of a hardware architecture of another cluster system. As shown in FIG. 1(b), the cluster system may include a plurality of service forwarding devices 100. Any two service forwarding devices 100 are directly connected through a cable, so that the plurality of service forwarding devices can be combined into a larger service forwarding networking system (namely, the cluster system), to meet higher communication requirements.

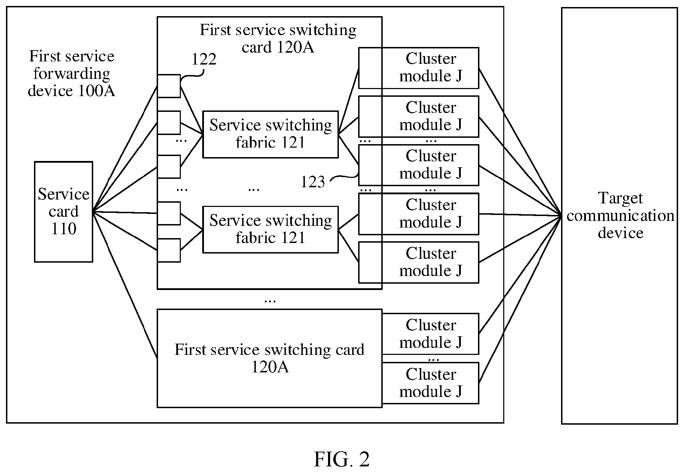

A related technology proposes a first service forwarding device 100A. As shown in FIG. 2, the first service forwarding device 100A includes at least one service card 110 and a plurality of first service switching cards 120A. Each first service switching card 120A includes a plurality of service switching fabrics 121, a plurality of first connection interfaces 122, a plurality of second connection interfaces 123, and a plurality of cluster modules J. The plurality of service switching fabrics 121 are electrically connected to the at least one service card 110 in the service forwarding device 100 through the plurality of first connection interfaces 122. The plurality of service switching fabrics 121 are connected to the plurality of corresponding cluster modules J through the plurality of second connection interfaces 123, and are connected to an external target communication device through the plurality of cluster modules J and cables. For example, the cluster module J may be an optical module or an electrical module. When the first service forwarding device 100A is used in the architecture shown in FIG. 1(a), the external target communication device is the cluster switching device 200. When the first service forwarding device 100A is used in the architecture shown in FIG. 1(b), the external target communication device is another service forwarding device 100. A structure of the another service forwarding device 100 may be a structure shown in FIG. 2, or may be a structure other than the architecture shown in FIG. 2.

For example, the service forwarding device 100 may be a network communication device such as a router, a server, or a switch.

In the related technology shown in FIG. 2, there are the following problems. First, the cluster modules J and all hardware units (for example, various interfaces and cables) that match the cluster modules J need to be integrated on the first service switching card 120A. The plurality of service switching fabrics 121 and the like further need to be integrated on the first service switching card 120A. The cluster modules J and components (for example, cables) that match the cluster modules J occupy a large amount of area overheads of the first service switching card 120, limiting a layout capacity of the service switching fabrics 121. Similarly, the cables of the cluster modules J also occupy a device inner volume of the first service forwarding device 100A, limiting a layout space capacity of the first service switching card 120A in the first service forwarding device 100A. Second, the first service forwarding device 100A is an integrated device. In addition to the plurality of first service switching cards 120A and the service card 110, a related service switching controller, a backplane configured to connect the first service switching card 120A and the service card 110, and the like are further integrated in the device. Therefore, to ensure normal running of the first service forwarding device 100A, a heat sink (for example, a fan) is further disposed in the first service forwarding device 100A, to dissipate heat for a dense integrated structure in the device. The cluster modules J densely disposed on the first service switching card 120A may form a blocking structure, and the cluster modules J may affect heat dissipation performance of the service switching fabric 121 regardless of a wind direction of a ventilation channel generated by the heat sink. Third, the first service forwarding device 100A may be used as an independent communication device in a non-cluster application, and may also be used as a communication device in the embodiment shown in FIG. 1 in a cluster application. However, the corresponding components such as the cluster module J, the heat sink, and some power supplies disposed on the first service switching card 120A in the first service forwarding device 100A are all designed for the cluster application. When these components occupy large hardware costs and area overheads, the first service forwarding device 100A in a non-cluster application scenario also needs to bear the hardware costs.

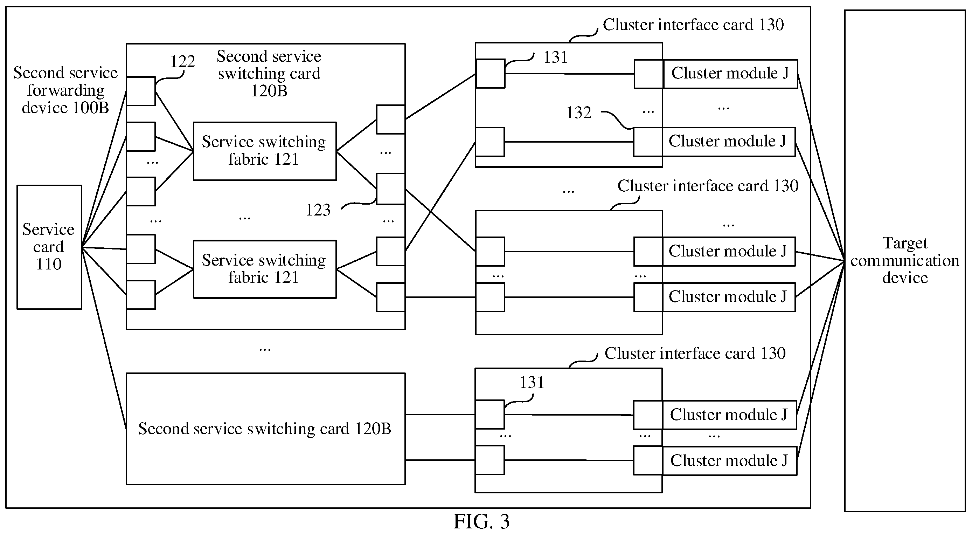

To resolve the foregoing problems, an embodiment of this application provides a second service forwarding device 100B. As shown in FIG. 3, the second service forwarding device 100B includes at least one service card 110, a plurality of second service switching cards 120B, and a plurality of cluster interface cards 130. The second service switching card 120B includes a plurality of service switching fabrics 121, a plurality of first connection interfaces 122, and a plurality of second connection interfaces 123. Each cluster interface card 130 includes a plurality of first serializer (SerDes)/deserializer interfaces 131 and a plurality of second serializer/deserializer interfaces 132. The plurality of service switching fabrics 121 are electrically connected to the at least one service card 110 in the second service forwarding device 100B through the plurality of first connection interfaces 122. The plurality of service switching fabrics 121 are connected to a plurality of first serializer/deserializer interfaces 131 on the plurality of corresponding cluster interface cards 130 through the plurality of second connection interfaces 123. A plurality of second serializer/deserializer interfaces 132 on the plurality of cluster interface cards 130 may be connected to a plurality of corresponding cluster modules J, and are connected to an external target communication device through the plurality of cluster modules J and cables. For example, when the second service forwarding device 100B is used in the architecture shown in FIG. 1(a), the external target communication device is the cluster switching device 200. When the second service forwarding device 100B is used in the architecture shown in FIG. 1(b), the external target communication device is another service forwarding device 100. A structure of the another service forwarding device 100 may be a structure shown in FIG. 3, or may be a structure (for example, the structure shown in FIG. 2) other than the architecture shown in FIG. 3.

In the embodiment shown in FIG. 3 of this application, the cluster module J is not disposed in the second service switching card 120B. In addition, the plurality of cluster interface cards 130 are disposed in the second service forwarding device 100B, and a data exchange connection is implemented between the second service switching card 120B and the first serializer/deserializer interface 131 of the cluster interface card 130 based on a SerDes technology. The plurality of first serializer/deserializer interfaces 131 are connected to the plurality of corresponding second serializer/deserializer interfaces 132 in one-to-one correspondence. The plurality of second serializer/deserializer interfaces 132 may be connected to the plurality of cluster modules J in one-to-one correspondence, to implement service interaction with the external target communication device through the cluster modules J. In this implementation, the cluster modules J and hardware that matches the cluster modules J do not need to be designed in the second service switching card 120B of the second service forwarding device 100B, to reduce hardware area overheads caused by the cluster modules J. In addition, the cluster module J does not affect heat dissipation of the second service switching card 120B. In addition, when a connection to the cluster module J is implemented based on the cluster interface card 130, the cluster interface card 130 may integrate more serializer/deserializer interfaces together, which has a higher integration level, so that a layout design of the second service switching card 120B can be closer. In addition, the cluster module J may be in communication connection to the second serializer/deserializer interface 132 in a pluggable form, so that the cluster module J may be disposed outside the second service forwarding device 100B, to avoid occupation of device space inside the second service forwarding device 100B by the cluster module J and a cable corresponding to the cluster module J, so as to improve a designed component capacity, heat dissipation performance, and the like of an overall component design in the second service forwarding device 100B.

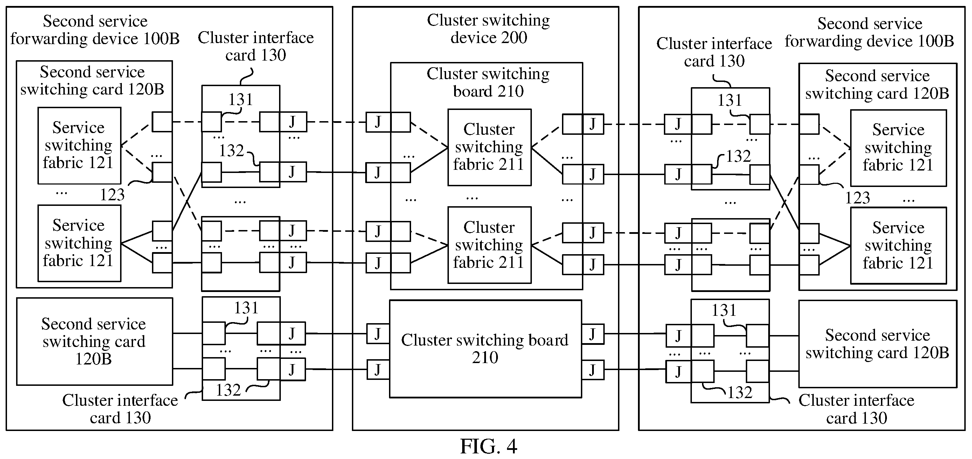

However, in the embodiment shown in FIG. 3, in actual application, each service switching fabric 121 in each second service switching card 120B is connected to a first serializer/deserializer interface 131 in a corresponding cluster interface card 130 in one-to-one correspondence through a second connection interface 123, and is connected to the cluster module J in one-to-one correspondence through the first serializer/deserializer interface 131 and a corresponding second serializer/deserializer interface 132. An example in which the second service forwarding device 100B recorded in FIG. 3 is used in the scenario architecture shown in FIG. 1(a) is used. As shown in FIG. 4, the cluster switching device 200 may include a plurality of cluster switching boards 210 and a plurality of cluster modules J. Each cluster switching board 210 includes a plurality of cluster switching fabrics 211. The plurality of cluster switching fabrics 211 establish communication connections to second serializer/deserializer interfaces 132 in second service forwarding devices 100B on both sides respectively in one-to-one correspondence through the plurality of cluster modules J in the cluster switching device 200. In FIG. 4, each service switching fabric 121 in a second service forwarding device 100B is connected to different cluster interface cards 130 through corresponding second connection interfaces 123. There is a determined one-to-one correspondence between a first serializer/deserializer interface 131 in a cluster interface card 130 and a second connection interface 123 in a second service switching card 120B. There is a determined one-to-one correspondence between a first serializer/deserializer interface 131 and a second serializer/deserializer interface 132 in a cluster interface card 130. There is a determined one-to-one correspondence between a cluster switching fabric 211 in a cluster switching device 200 and a second serializer/deserializer interface 132 in a second service forwarding device 100B on each side. For example, a dashed line in FIG. 4 is used to represent a transmission path of first service data output by one service switching fabric 121 in a second service forwarding device 100B on the left. It can be learned that the service switching fabric 121 may transmit service data through first serializer/deserializer interfaces 131 in different cluster interface cards 130, but each first serializer/deserializer interface 131 is in one-to-one correspondence with a determined second serializer/deserializer interface 132. Similarly, in the second service forwarding device 100B on the right, when the service data is received through a second serializer/deserializer interface 132, the service data is also transmitted through a determined one-to-one corresponding first serializer/deserializer interface 131. Therefore, when the embodiment shown in FIG. 4 is implemented, in the cluster interface card 130, the first serializer/deserializer interface 131 and the second serializer/deserializer interface 132 have a fixed corresponding connection relationship. In this case, service switching fabrics 121 on both sides implements a one-to-one direct connection through the second connection interface 123, the first serializer/deserializer interface 131, the second serializer/deserializer interface 132, and the cluster switching fabric 211 that have determined correspondences. In this real-time manner, there are the following problems.

Problem 1: It needs to be ensured that a quantity of physical link buses (lanes) and transmission rates are equal between the first serializer/deserializer interface 131 and the second serializer/deserializer interface 132 that are interconnected in each cluster interface card 130, so that the first serializer/deserializer interface 131 and the second serializer/deserializer interface 132 work normally. In this case, a design of the cluster interface card 130 is strict and lacks flexibility. For example, if no redundant lane is designed in a plurality of lanes of the first serializer/deserializer interface 131 for alternative switching when a lane-level fault occurs, the second serializer/deserializer interface 132 also has no redundant lane that can be used for alternative switching when the lane-level fault occurs.

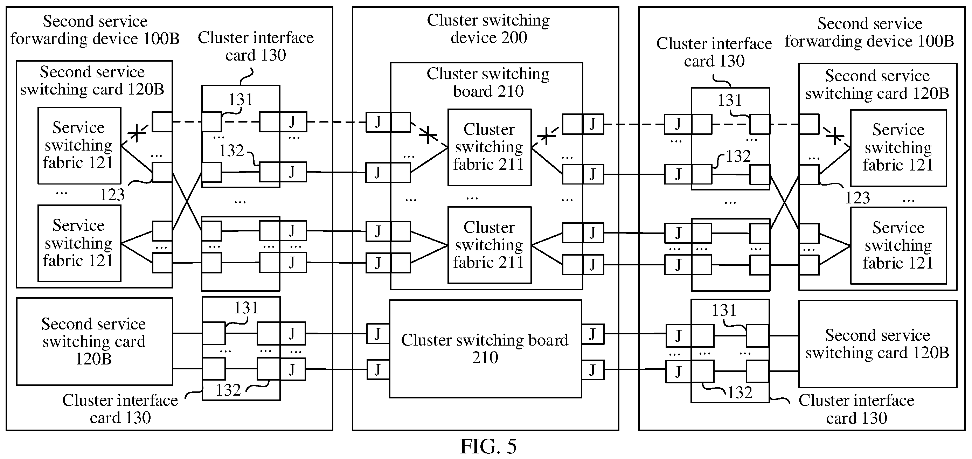

Problem 2: In the embodiment shown in FIG. 4, there is no effective fault isolation. For example, a specific service switching fabric 121 in the second service forwarding device 100B on the left in FIG. 5 is faulty. A cluster interface card 130 connected to the service switching fabric 121 in one-to-one correspondence also needs to switch and isolate a corresponding first serializer/deserializer interface 131 and second serializer/deserializer interface 132. A dashed line shows a service data transmission path corresponding to a first serializer/deserializer interface 131 connected to the faulty service switching fabric 121. It can be learned that a corresponding cluster switching fabric 211 that is in each corresponding cluster switching board 210 and that is directly connected to the faulty service switching fabric 121 also needs to be switched and isolated. In addition, in the second service forwarding device 100B on the right, a cluster interface card 130, a service switching fabric 121, and the like in the second service forwarding device 100B also need to switch and isolate an interface that is directly connected to the faulty service switching fabric 121 on the left. Therefore, in this implementation, when a component at a specific level in a multi-level cluster is faulty, a component at each level in the multi-level cluster needs to correspondingly cooperate to perform related fault isolation processing. This reduces running efficiency of the cluster system and brings reliability problems.

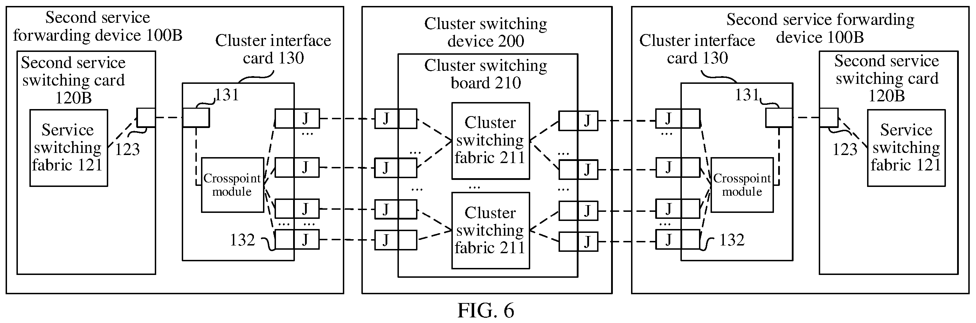

Problem 3: In the embodiments shown in FIG. 4 and FIG. 5, in the cluster interface card 130, data of a plurality of lanes input through one first serializer/deserializer interface 131 from one service switching fabric 121 is output to one cluster switching fabric 211 only through a corresponding second serializer/deserializer interface 132. As shown in FIG. 6, when a networking (mesh) connection architecture is established between one second serializer/deserializer interface 132 and a plurality of cluster switching fabrics 211 in one switching plane (namely, in one cluster switching board 210), first service data transmitted by a plurality of SerDes buses (namely, a plurality of lanes) of one first serializer/deserializer interface 131 is evenly distributed to a plurality of second serializer/deserializer interfaces 132 based on a crosspoint (crosspoint) module disposed in the cluster interface card 130, to transmit corresponding service data to the plurality of cluster switching fabrics 211 in the cluster switching board 210 through the plurality of second serializer/deserializer interfaces 132. A dashed line in FIG. 6 is an example of a transmission path of service data transmitted through a serializer/deserializer interface 131 in this case. However, in this implementation, a plurality of lanes between one first serializer/deserializer interface 131 of one cluster interface card 130 and one service switching fabric 121 need to be an integer multiple of all cluster switching fabrics 211 in one switching plane (namely, in one cluster switching board 210). In other words, when one cluster switching board 210 includes 12 cluster switching fabrics 211, if there are only eight lanes between one first serializer/deserializer interface 131 of one cluster interface card 130 and one service switching fabric 121, data of the eight lanes cannot be divided and evenly distributed to the corresponding 12 cluster switching fabrics 211 based on the buses. Therefore, only when there is an integer multiple of 12 lanes between one first serializer/deserializer interface 131 of one cluster interface card 130 and one service switching fabric 121, data of the integer multiple of 12 lanes can be divided and evenly distributed to the corresponding 12 cluster switching fabrics 211 based on the buses. In this mesh distributed and even connection architecture, a quantity of lanes between the first serializer/deserializer interface 131 and the service switching fabric 121 is limited greatly, and a large quantity of lanes may be required.

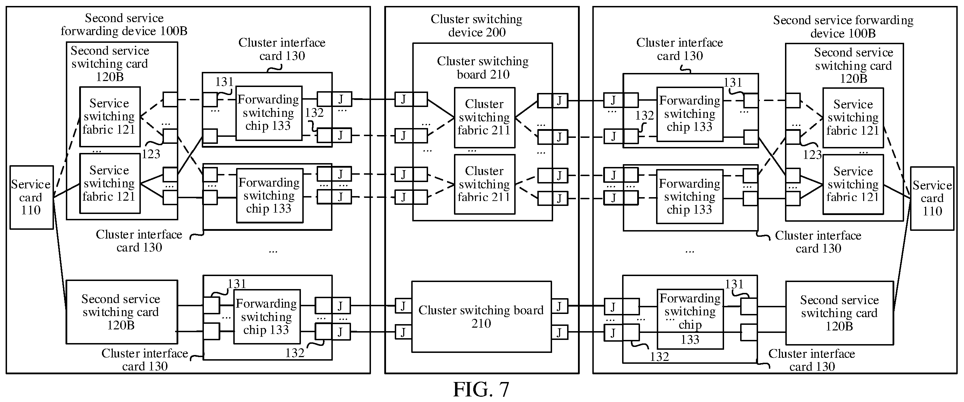

To resolve problems of design limitation and lack of effective fault isolation caused by application of the cluster interface card in the foregoing embodiments, in some possible implementations, as shown in FIG. 7, the cluster interface card 130 further includes a forwarding switching chip 133. The forwarding switching chip 133 is separately connected to a plurality of first serializer/deserializer interfaces 131 and a plurality of second serializer/deserializer interfaces 132. The plurality of first serializer/deserializer interfaces 131 are configured to be in communication connection to the second service switching card 120B. The plurality of second serializer/deserializer interfaces 132 are configured to be in communication connection to a target communication device. The forwarding switching chip 133 is configured to: input first service data through any one of the plurality of first serializer/deserializer interfaces 131, and select at least one of the plurality of second serializer/deserializer interfaces 132 to output the first service data; or input second service data through any one of the plurality of second serializer/deserializer interfaces 132, and select at least one of the plurality of first serializer/deserializer interfaces 131 to output the second service data.

For example, one or more forwarding switching chips 133 may be disposed in one cluster interface card 130.

For example, as shown in FIG. 7, a service switching fabric 121 in a second service switching card 120B in the second service forwarding device 100B on the left may send the first service data to a specific first serializer/deserializer interface 131 of one cluster interface card 130. The forwarding switching chip 133 may obtain the first service data through the corresponding first serializer/deserializer interface 131, select at least one of the plurality of second serializer/deserializer interfaces 132, allocate the first service data to the selected at least one second serializer/deserializer interface 132, and transmit the first service data to a target communication device through the selected at least one second serializer/deserializer interface 132. FIG. 7 shows an example in which the target communication device is a cluster switching device 200. After obtaining the first service data through a corresponding cluster module J, a cluster switching fabric 211 in a cluster switching device 200 forwards the first service data to the service forwarding device 100B on the right.

For example, as shown in FIG. 7, the target communication device may send the second service data to one or more cluster interface cards 130 in the second service forwarding device 100B. FIG. 7 shows the example in which the target communication device is the cluster switching device 200. The second service data is sent from the service forwarding device 100B on the right to the second service forwarding device 100B on the left through the cluster switching device 200. In this case, for one forwarding switching chip 133 in one cluster interface card 130, when the second service data is input through a specific second serializer/deserializer interface 132, the forwarding switching chip 133 may alternatively select at least one of the plurality of first serializer/deserializer interfaces 131, and allocate the input second service data to the selected at least one first serializer/deserializer interface 131, and transmit the second service data to a corresponding service switching fabric 121 in the second service forwarding device 100B through the selected at least one first serializer/deserializer interface 131.

For example, the forwarding switching chip 133 in the cluster interface card 130 may allocate and output input service data based on different data granularities. For example, the input service data may be allocated based on different data flows, the input service data may be allocated based on different data packets, or the input service data may be allocated based on different cells. For example, the forwarding switching chip 133 may be an additionally designed component configured to forward a service, or may be designed by using a fabric interface chip (fabric interface chip, FIC) selected for a service switching fabric or a cluster switching fabric 211.

In the embodiment shown in FIG. 7 of this application, the forwarding switching chip 133 is disposed in the cluster interface card 130. The forwarding switching chip 133 may select different serializer/deserializer interfaces to allocate and transmit input data. Based on the forwarding switching chip 133, decoupling of a one-to-one correspondence between the first serializer/deserializer interface 131 and the second serializer/deserializer interface 132 may be implemented.

The uppermost cluster interface card 130 in the second service forwarding device 100B on the left in FIG. 7 is used as an example, and a dashed line represents a transmission path of the input first service data. In this case, the forwarding switching chip 133 may transmit and output, through any selected second serializer/deserializer interface 131, the first service data input through the first serializer/deserializer interface 131. The first service data output by the second service forwarding device 100B on the left is the second service data received by the second service forwarding device 100B on the right. Similarly, in the second service forwarding device 100B on the right, the uppermost forwarding switching chip 133 may output, through any selected first serializer/deserializer interface 131, the second service data received through the second serializer/deserializer interface 132.

A 2^{nd} cluster interface card 130 in the second service forwarding device 100B on the left in FIG. 7 is used as an example, and a dashed line represents a transmission direction of the input first service data. In this case, the forwarding switching chip 133 may transmit and output, through a plurality of selected second serializer/deserializer interfaces 131, the first service data input through the first serializer/deserializer interface 131. The first service data output by the second service forwarding device 100B on the left is the second service data received by the second service forwarding device 100B on the right. Similarly, in the second service forwarding device 100B on the right, the uppermost forwarding switching chip 133 may output, through any selected first serializer/deserializer interface 131, the second service data received through the plurality of second serializer/deserializer interfaces 132.

In the implementation recorded in the embodiment in FIG. 7, service data input through one serializer/deserializer to the cluster interface card 130 may be selected and allocated to one or more serializer/deserializer interfaces for output. In this case, a one-to-one correspondence between an input serializer/deserializer interface and an output serializer/deserializer interface is decoupled, so that a design of the cluster interface card is more flexible. In addition, because there is no one-to-one correspondence between the input serializer/deserializer interface and the output serializer/deserializer interface, a fault of a specific service switching fabric 121 can only affect normal working of a corresponding connected first serializer/deserializer interface 131, and does not affect normal working of a second serializer/deserializer interface 132 and a downstream component thereof, to effectively implement fault isolation.

For example, in the embodiment shown in FIG. 7, a quantity of first serializer/deserializer interfaces 131 and a quantity of second serializer/deserializer interfaces 132 in a same cluster interface card 130 may be equal or not equal.

For example, in the embodiment shown in FIG. 7, a quantity of physical link buses (lanes) of each second serializer/deserializer interface 132 may be equal to or not equal to a quantity of physical link buses of the first serializer/deserializer interface 131. In an example, the quantity of physical link buses of the second serializer/deserializer interface 132 is greater than the quantity of physical link buses of the first serializer/deserializer interface 131. In this embodiment of this application, based on the embodiment in FIG. 7, quantities of lanes of an input serializer/deserializer interface and an output serializer/deserializer interface are not limited. In addition, when the quantity of lanes of the second serializer/deserializer interface 132 is greater than the quantity of lanes of the first serializer/deserializer interface 131, a redundant lane may be reserved in the second serializer/deserializer interface 132, so that the redundant lane can be used for alternative switching when a lane-level fault occurs, to resolve the problem 1 mentioned in the embodiment in FIG. 4.

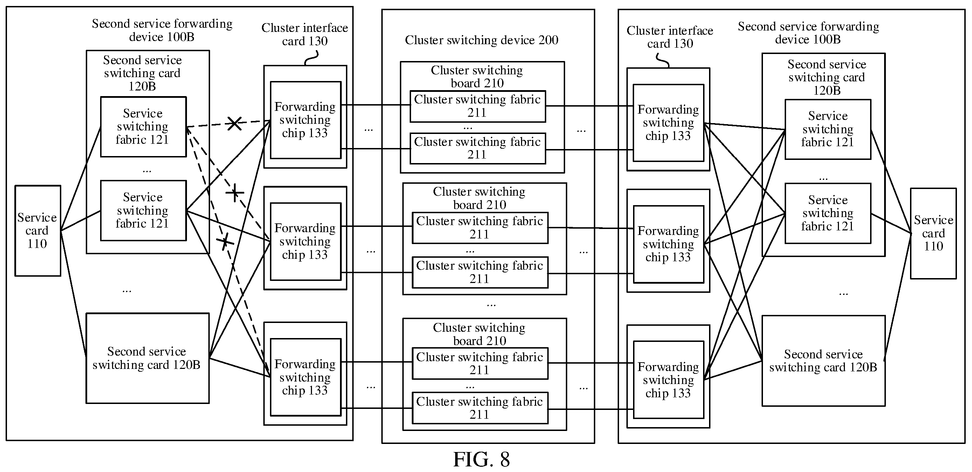

For example, as shown in FIG. 7, the second service forwarding device 100B includes a plurality of second service switching cards 120B and a plurality of cluster interface cards 130. Each second service switching card 120B includes a plurality of service switching fabrics 121. Each cluster interface card 130 includes a forwarding switching chip 133, a plurality of first serializer/deserializer interfaces 131, and a plurality of second serializer/deserializer interfaces 132. In this case, as shown in FIG. 8 (an illustration of interfaces of components and the cluster modules J is omitted in the figure, and for a specific structure, refer to the related illustration in the accompanying drawings of the foregoing embodiments), a large mesh connection structure may be formed between a plurality of service switching fabrics 121 in the plurality of second service switching cards 120B and the plurality of cluster switching boards 210. That is, the forwarding switching chip 133 in each cluster interface card 130 is separately connected to the plurality of corresponding first serializer/deserializer interfaces 131. Each first serializer/deserializer interface 131 is connected to one service switching fabric 121 in one second service switching card 120B, and each service switching fabric 121 is connected to a first serializer/deserializer interface 131 in at least one cluster interface card 130. In this case, each cluster interface card 130 may be configured to: in response to a fault of a target second service switching fabric in a target second service switching card 120B, isolate a target first serializer/deserializer interface, where the target first serializer/deserializer interface is a serializer/deserializer interface in the plurality of first serializer/deserializer interfaces 131 that is in communication connection to the target service switching fabric 121. In this embodiment of this application, after a one-to-one correspondence between an input serializer/deserializer interface and an output serializer/deserializer interface is decoupled, as shown in FIG. 8, when the target second service switching card in the plurality of second service switching cards 120B is faulty (corresponding to a transmission path of a dashed line), each cluster interface card 130 needs to isolate only the target first serializer/deserializer interface 131 in the plurality of first serializer/deserializer interfaces 131 that is correspondingly connected to the target second service switching card 120B, to implement fault isolation. After an interface is isolated, other services can still be exchanged and forwarded normally. A quantity of lanes and a transmission rate of each interface do not change, and only an effective bandwidth of a service decreases slightly. In this case, in a transmission path of first service data, downstream components (for example, a cluster switching fabric 211 in a cluster switching device 200 in FIG. 8, and a service switching fabric 121 in a service forwarding device 100 on the right) of the cluster interface card 130 do not need to perform a corresponding switching and isolation operation for the fault of the target second service switching card.

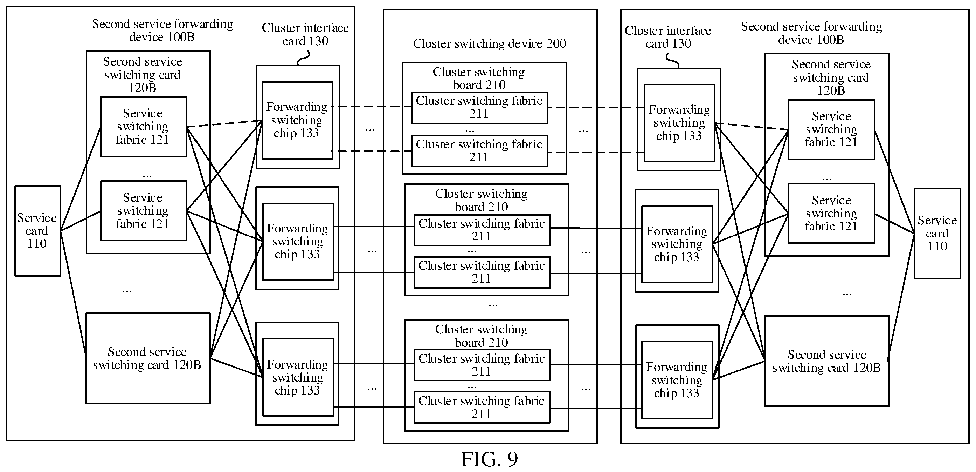

For example, as shown in FIG. 9 (an illustration of interfaces of components and the cluster modules J is omitted in the figure, and for a specific structure, refer to the related illustration of the accompanying drawings of the foregoing embodiments), a large mesh connection may be formed between each forwarding switching chip 133 in the plurality of cluster interface cards 130 and a plurality of cluster switching fabrics 211 in one or more corresponding cluster switching boards 210 (namely, one or more switching planes) in the cluster switching device 200. In the embodiment shown in FIG. 3 of this application, one cluster interface card 130 is connected to a plurality of cluster switching fabrics 211 in one cluster switching board 210 (namely, in one switching plane) through a plurality of second serializer/deserializer interfaces 132 on the cluster interface card 130, but each first serializer/deserializer interface 131 corresponds to one cluster switching fabric 211 through one second serializer/deserializer interface 132. However, in the embodiment shown in FIG. 9, a dashed line in FIG. 9 shows an implementation solution of a mesh connection structure in which first service data input through one first serializer/deserializer interface 131 may be transmitted to cluster switching fabrics 211 connected to a plurality of second serializer/deserializer interfaces 132. In this case, one first serializer/deserializer interface 131 may correspond to a plurality of second serializer/deserializer interfaces 132 in the cluster interface card 130, and correspond to a plurality of cluster switching fabrics 211 in one switching plane through the plurality of second serializer/deserializer interfaces 132, so that the first service data input through one first serializer/deserializer interface 131 can be output to the large mesh connection structure of the plurality of cluster switching fabrics 211. In addition, although not shown in FIG. 9, a plurality of second serializer/deserializer interfaces 132 in one cluster interface card 130 may alternatively be correspondingly connected to a plurality of cluster switching fabrics 211 in different switching planes to form a large mesh connection structure. In an implementation of FIG. 9, after a one-to-one correspondence between an input serializer/deserializer interface and an output serializer/deserializer interface is decoupled, the first service data input through the first serializer/deserializer interface 131 may be directly allocated to different second serializer/deserializer interfaces 132 based on the cluster switching fabric 211. During implementation of the solution, a relationship between a quantity of lanes of the first serializer/deserializer interface 131 and a quantity of cluster switching fabrics 211 connected to the corresponding second serializer/deserializer interface 132 does not need to be considered. In this implementation, the quantity of lanes of the first serializer/deserializer interface 131 does not need to be set to a multiple of the quantity of corresponding cluster switching fabrics 211, and a mesh connection between a second service forwarding device 100B and a target communication device (for example, the cluster switching device 200) may be further implemented based on the first serializer/deserializer interface 131 with a smaller quantity of lanes.

In some possible implementations, a data transmission rate of the first serializer/deserializer interface 131 is greater than or equal to a data transmission rate of the second serializer/deserializer interface 132. For example, a data transmission rate of each second serializer/deserializer interface 132 is 53.125 Gbit/s. In this embodiment of this application, based on the forwarding switching chip 133, transmission rates of the input serializer/deserializer interface and the output serializer/deserializer interface may not be limited. The first serializer/deserializer interface 131 and the second serializer/deserializer interface 132 may have different transmission rates. In addition, the second serializer/deserializer interface 132 is an interface used by the second service forwarding device 100B to be in communication connection to another external target communication device. To ensure universality and adaptation of the second service forwarding device 100B, the transmission rate of the second serializer/deserializer interface 132 may be set at a standard Ethernet frequency, namely, 53.125 Gbit/s. In this case, a general-purpose cluster module J (for example, an optical module or an electrical module) may be connected to the second serializer/deserializer interface 132 in a pluggable manner, so that the second service forwarding device 100B establishes a connection to the target communication device through a cable of the cluster module J.

For example, the quantity of lanes of the first serializer/deserializer interface 131 may be equal to the quantity of lanes of the second serializer/deserializer interface 132, and the transmission rate of the first serializer/deserializer interface 131 is greater than the transmission rate of the second serializer/deserializer interface 132. For example, the first serializer/deserializer interface 131 includes eight lanes and the transmission rate of the first serializer/deserializer interface 131 is 58.125 Gbit/s, and the second serializer/deserializer interface 132 includes eight lanes and the transmission rate of the second serializer/deserializer interface 132 is 53.125 Gbit/s. In this embodiment of this application, the second serializer/deserializer interface 132 works at a standardized rate, and the first serializer/deserializer interface 131 is an interface inside the second service forwarding device 100B, and may work at a non-standardized rate, so that service availability of the second service forwarding device 100B is improved when costs are reduced.

For example, the data transmission rate of the first serializer/deserializer interface 131 is a first multiple of the data transmission rate of the second serializer/deserializer interface 132, and the quantity of physical link buses of the second serializer/deserializer interface 132 is less than or equal to the first multiple of the quantity of physical link buses of the first serializer/deserializer interface 131.

In an example, the data transmission rate of the first serializer/deserializer interface 131 is twice the data transmission rate of the second serializer/deserializer interface 132, and the quantity of lanes of the second serializer/deserializer interface 132 is equal to twice the quantity of lanes of the first serializer/deserializer interface 131. In this case, the first serializer/deserializer interface 131 may include eight lanes and the transmission rate of the first serializer/deserializer interface 131 is 106.25 Gbit/s; and the second serializer/deserializer interface 132 includes 16 lanes and the transmission rate of the second serializer/deserializer interface 132 is 53.125 Gbit/s. In this case, a same cluster capacity under an 800G module can be implemented through a 400G module, thereby improving design flexibility of the cluster system.

In an example, the data transmission rate of the first serializer/deserializer interface 131 is twice the data transmission rate of the second serializer/deserializer interface 132, and the quantity of lanes of the second serializer/deserializer interface 132 is less than twice the quantity of lanes of the first serializer/deserializer interface 131. In this case, the first serializer/deserializer interface 131 may include eight lanes and the transmission rate of the first serializer/deserializer interface 131 is 106.25 Gbit/s; and the second serializer/deserializer interface 132 may include 16+2 lanes and the transmission rate of the second serializer/deserializer interface 132 is 53.125 Gbit/s. In this case, a same cluster capacity under an 800G module can be implemented through a 400G module, thereby improving design flexibility of the cluster system. In addition, the second serializer/deserializer interface 132 may further have a redundancy of two lanes, to be used as an alternative when a lane-level fault occurs.

In some possible implementations, in the architectures shown in FIG. 1, FIG. 2, FIG. 3, FIG. 4, FIG. 5, FIG. 6, FIG. 7, and FIG. 9, the service forwarding device 100 (or the second service forwarding device 100B) may further include a service interaction board controller. The cluster switching device 200 may further include a cluster interaction board controller 220. In the cluster system, different service forwarding devices 100 may obtain cluster parameter information through service interaction board controllers, to perform control fitting management on each device. The cluster parameter information may include exchange and synchronization of time information, clock information, and frame header information in the cluster system in which each service forwarding device 100 is located. In addition, each service forwarding device 100 may also exchange and synchronize the foregoing information with the cluster interaction board controller 220 in the cluster switching device 200 based on a service interaction board controller 140.

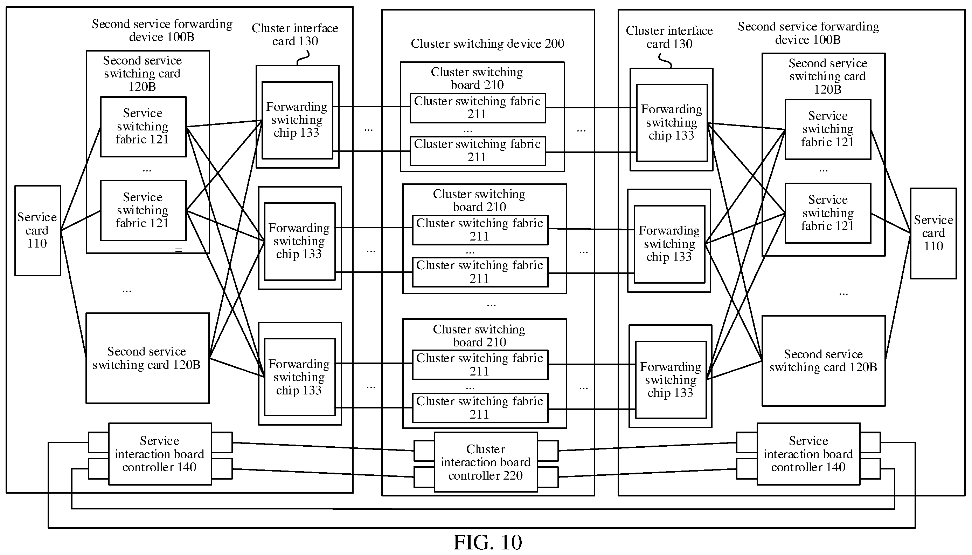

In some examples, as shown in FIG. 10, the service interaction board controller 140 may exchange and synchronize the time information, the clock information, the frame header information, and the like in an out-of-band management communication manner. In this embodiment of this application, as shown in FIG. 10, out-of-band management communication means that corresponding interfaces and cables are additionally designed at the service interaction board controller 140, and the service interaction board controller 140 communicates and exchanges the cluster parameter information (the time information, the clock information, the frame header information, and the like) with another main control component based on the additionally designed interfaces and cables. In this implementation, the interfaces, cables, and the like that are additionally designed at the service interaction board controller 140 are designed for the service forwarding device 100 to be used in a cluster scenario, and occupy PCB board layout area overheads inside the service forwarding device 100, affect heat dissipation, increase costs, and the like.

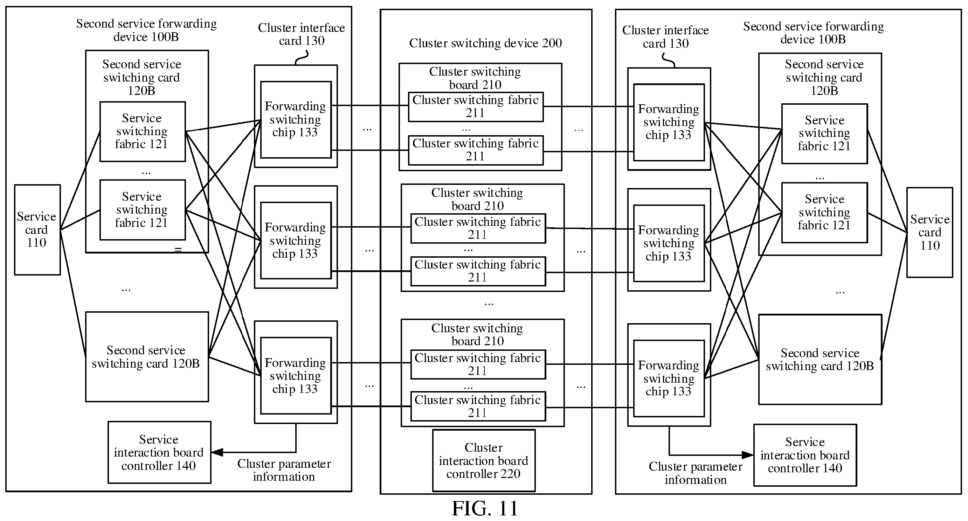

In some examples, in the architectures shown in FIG. 3, FIG. 4, FIG. 5, FIG. 6, FIG. 7, FIG. 8, and FIG. 9, the service interaction board controller 140 may exchange and synchronize the time information, the clock information, the frame header information, and the like in an in-band management communication manner. As shown in FIG. 11, the cluster interface card 130 is further configured to: output the cluster parameter information to the service interaction board controller 140, where the cluster parameter information includes at least one of the following: time information, clock information, and frame header information of a cluster in which the cluster interface card 130 is located. In this embodiment of this application, the cluster parameter information such as the time information, the clock information, and the frame header information may be transmitted over a data link for data transmission in the in-band transmission manner. In this case, the cluster interface card 130 may extract management information from service data for forwarding communication, and upload the management information to the service interaction board controller 140. In this implementation, interfaces, cables, and the like used for management information transmission do not need to be additionally designed, and a layout area on a PCB board can be reduced, so that a layout of the PCB board can be better designed. In addition, problems of heat dissipation interference and costs caused by these interfaces and cables can be reduced.

In some possible implementations, a clock and data recovery (clock and data recovery, CDR) circuit may be further designed in the cluster interface card 130. When communication is performed based on the SerDes technology, transmitted clock information and the like may be processed based on the CDR circuit.

In some possible implementations, the second service forwarding device 100B may be used, in different hardware forms, in the cluster system architectures shown in FIG. 1(a) and FIG. 1(b). For example, one or two service forwarding devices 100 in FIG. 1(a) and FIG. 1(b) may be the second service forwarding device 100B recorded in the foregoing embodiments. In addition, in the foregoing embodiments, that the second service forwarding device 100B implements service interaction with the target communication device based on the plurality of second service switching cards 120B and the plurality of cluster interface cards 130 is described. However, in actual application, on a basis of integrating the plurality of second service switching cards 120B and the plurality of cluster interface cards 130, the second service forwarding device 100B may also integrate some first service switching cards 120A shown in FIG. 2. In this case, the second service forwarding device 100B may separately establish connections to a same target communication device or different target communication devices based on the second service switching card 120B and the first service switching card 120A.

Based on the second service forwarding device 100B including the architectures in FIG. 3, FIG. 4, FIG. 5, FIG. 6, FIG. 7, FIG. 8, FIG. 9, and FIG. 11, the following service forwarding method including the following step S100 may be performed.

S100: Perform interactive communication of service data based on a cluster interface card 130.

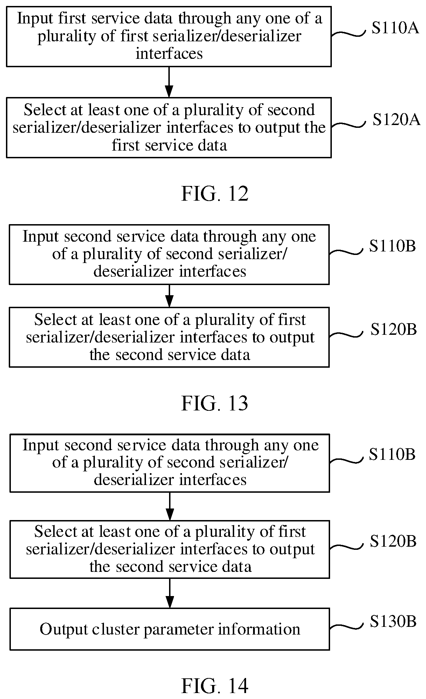

In some possible implementations, the second service forwarding device 100B may send first service data to a target communication device based on the cluster interface card 130. In this case, step S100 includes the following sub-operations of step S110A and step S120A shown in FIG. 12.

S110A: Input the first service data through any one of a plurality of first serializer/deserializer interfaces 131.

In this embodiment of this application, a service card 110 in the second service forwarding device 100B may transmit the first service data to one or more first serializer/deserializer interfaces 131 of the cluster interface card 130 through a second service switching card 120B. As shown in FIG. 4, FIG. 5, FIG. 6, FIG. 7, FIG. 8, FIG. 9, and FIG. 11, during service communication, a forwarding switching chip 133 may input the first service data through any first serializer/deserializer interface 131.

S120A: Select at least one of a plurality of second serializer/deserializer interfaces 132 to output the first service data.

In this embodiment of this application, as shown in FIG. 4, FIG. 5, FIG. 6, FIG. 7, FIG. 8, FIG. 9, and FIG. 11, there is no fixed correspondence between the first serializer/deserializer interface 131 and the second serializer/deserializer interface 132. The forwarding switching chip 133 may select at least one of the plurality of second serializer/deserializer interfaces 132 to output the first service data.

In some possible implementations, when selecting the second serializer/deserializer interface 132, the forwarding switching chip 133 may select the at least one second serializer/deserializer interface 132 based on target information. The target information includes at least one or more of the following: a data flow type of service data, an effective bandwidth of a current service, and a service type and a service priority of the service data. In this embodiment of this application, based on different product designs, application scenarios, and the like, the at least one second serializer/deserializer interface 132 may be selected based on different target information.

In some possible implementations, a quantity of physical link buses of the second serializer/deserializer interface 132 is greater than a quantity of physical link buses of the first serializer/deserializer interface 131. In this case, step S120A may specifically include: outputting the first service data based on a part of physical link buses of the at least one second serializer/deserializer interface 132; and in response to a fault of a target physical link bus in the part of physical link buses of the second serializer/deserializer interface 132, isolating the target physical link bus, and switching to an unused physical link bus of the second serializer/deserializer interface to output the first service data. In this embodiment of this application, the quantity of lanes of the second serializer/deserializer interface 132 may be set to be greater than the quantity of lanes of the first serializer/deserializer interface 131. In this case, a part of lanes of the second serializer/deserializer interface 132 may be used as redundant alternative lanes. The first service data may be transmitted based on the part of lanes of the second serializer/deserializer interface 132. When a specific target lane in the part of lanes for data transmission is faulty, a redundant alternative lane may be switched to, to replace the part of target lanes.

In some other embodiments, a quantity of physical link buses of the second serializer/deserializer interface 132 is equal to a quantity of physical link buses of the first serializer/deserializer interface 131, but redundant alternative lanes may be set in both the first serializer/deserializer interface 131 and the second serializer/deserializer interface 132. In this case, the forwarding switching chip 133 may also replace the faulty target lane based on the redundant alternative lane.

In an example, step S120A may further include: disabling a second serializer/deserializer interface 132 that is not selected in the plurality of second serializer/deserializer interfaces 132. In this embodiment of this application, the forwarding switching chip 133 may select a part of the plurality of second serializer/deserializer interfaces 132 to transmit the first service data to the target communication device, and may disable the second serializer/deserializer interface 132 that is not selected for transmitting the first service data, to reduce power consumption caused by an unused second serializer/deserializer interface 132.

In an example, step S120A may further include: When two or more serializer/deserializer interfaces are selected to transmit the first service data, a difference between target data amounts transmitted by any two selected second serializer/deserializer interfaces 132 is less than a preset threshold, where the target data amount is an amount of the first service data transmitted through each selected second serializer/deserializer interface 132. In this embodiment of this application, when transmitting the first service data, the forwarding switching chip 133 may transmit the first service data in a load balance (load balance) manner. For example, the first service data is evenly distributed to the selected at least one second serializer/deserializer interface 132 to the fullest extent for transmission. For example, this load balance transmission manner may be applied to the architecture shown in FIG. 9. When each forwarding switching chip 133 and a plurality of cluster switching fabrics 211 in one or more corresponding cluster switching boards 210 in a cluster switching device 200 form a large mesh connection through the plurality of second serializer/deserializer interfaces 132, the first service data obtained through one first serializer/deserializer interface 131 may be evenly allocated to one or more second serializer/deserializer interfaces 132, and is transmitted to one or more corresponding cluster switching fabrics 211. Similarly, in this implementation, a corresponding quantity of second serializer/deserializer interfaces 132 may be selected based on a load size such as an amount of the transmitted first service data to perform load balance transmission, and the unused second serializer/deserializer interface 132 is disabled.

In some possible implementations, step S120A may further include: in response to a fault of a target second service switching card 120B, isolating a target first serializer/deserializer interface, where the target first serializer/deserializer interface is a first serializer/deserializer interface 131 in the plurality of first serializer/deserializer interfaces 131 that is in communication connection to a faulty port of the target second service switching card. In this embodiment of this application, as shown in FIG. 8, when a port of a specific target second service switching card is faulty, a first serializer/deserializer interface 131 connected to the port cannot be normally used. In this case, the forwarding switching chip 133 needs to switch and isolate only the target first serializer/deserializer interface 131. A downstream of the forwarding switching chip 133 does not need to perform a corresponding isolation processing operation.

In this embodiment of this application, cluster parameter information is used to implement information synchronization, related management, and the like between service forwarding devices 100 in each cluster system. The cluster parameter information may include at least one of the following: time information, clock information, frame header information, and the like of a cluster in which the cluster interface card 130 is located. The cluster interface card 130 may obtain the cluster parameter information in an in-band management communication manner, and upload the cluster parameter information to a main control component (namely, the service interaction board controller 140 shown in FIG. 10) in the second service forwarding device 100B in which the cluster interface card 130 is located. In this in-band management communication manner, interfaces, cables, and the like that are additionally designed in out-of-band management communication can be avoided, to optimize a layout of a PCB board, and reduce component area overheads, cost overheads, heat dissipation interference, and the like.

In some possible implementations, the second service forwarding device 100B may send second service data to a target communication device based on the cluster interface card 130. In this case, step S100 may alternatively include the following sub-operations of step S110B and step S120B shown in FIG. 13.

S110B: Input second service data through any one of a plurality of second serializer/deserializer interfaces 132.

In this embodiment of this application, the cluster interface card 130 may receive, based on any one of the plurality of second serializer/deserializer interfaces 132, the second service data from a target communication device. When the target communication device is the cluster switching device 200 in the architecture shown in FIG. 1(a), the second service data is service data transmitted by the another service forwarding device 100 to the second service forwarding device 100B based on the cluster switching device 200. When the target communication device is the another service forwarding device 100 in the architecture shown in FIG. 1(b), the second service data is service data forwarded by the another service forwarding device 100 to the second service forwarding device 100B.

S120B: Select at least one of a plurality of first serializer/deserializer interfaces 131 to output the second service data.

In this embodiment of this application, the forwarding switching chip 133 may select at least one of the plurality of first serializer/deserializer interfaces 131 to output the second service data to a corresponding service switching fabric 121, and transmit the second service data to a service card 110 in the second service forwarding device 100B through the service switching fabric 121. For descriptions of related technical principles and beneficial effects of selecting the at least one of the plurality of first serializer/deserializer interfaces 131, refer to the related descriptions of selecting the at least one of the plurality of second serializer/deserializer interfaces 132 in the embodiment of step S110A and step S120A. Details are not described herein again.

In some examples, in a process of transmitting the second service data in step S110B and step S120B, management information of a cluster system may alternatively be transmitted in an in-band management communication manner. In this case, an operation of step S130B shown in FIG. 14 may be further performed.

S130B: Output cluster parameter information.

An embodiment of this application further provides a computer-readable storage medium. The computer-readable storage medium includes instructions. When the instructions are run on a processor, the processor is caused to perform the service forwarding methods recorded in the foregoing embodiments.

The processor in embodiments of this application may be a chip. For example, the processor may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed systems, devices, and methods may be implemented in other manners. For example, the described device embodiment is merely an example. For example, division into the modules is merely logical function division and may be other division in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. Some or all the modules may be selected based on actual needs to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cluster interface card, comprising a forwarding switching chip, a plurality of first serializer/deserializer interfaces, and a plurality of second serializer/deserializer interfaces, wherein the forwarding switching chip is separately connected to the plurality of first serializer/deserializer interfaces and the plurality of second serializer/deserializer interfaces;
the plurality of first serializer/deserializer interfaces are configured to be in communication connection to a service switching card, and the plurality of second serializer/deserializer interfaces are configured to be in communication connection to a target communication device; and
the forwarding switching chip is configured to: input first service data through any one of the plurality of first serializer/deserializer interfaces, and select at least one of the plurality of second serializer/deserializer interfaces to output the first service data; or input second service data through any one of the plurality of second serializer/deserializer interfaces, and select at least one of the plurality of first serializer/deserializer interfaces to output the second service data.

2. The cluster interface card according to claim 1, wherein the cluster interface card is further configured to:
in response to a fault of a target service switching card, isolate a target first serializer/deserializer interface, wherein the target first serializer/deserializer interface is a serializer/deserializer interface in the plurality of first serializer/deserializer interfaces that is in communication connection to a faulty port of the target service switching card.

3. The cluster interface card according to claim 1 or 2, wherein the selecting the at least one of the plurality of second serializer/deserializer interfaces to output the first service data comprises:
selecting the at least one of the plurality of second serializer/deserializer interfaces to output the first service data, wherein when two or more serializer/deserializer interfaces are selected to transmit the first service data, a difference between target data amounts transmitted by any two selected second serializer/deserializer interfaces is less than a preset threshold, and the target data amount is an amount of the first service data transmitted through each selected second serializer/deserializer interface.

4. The cluster interface card according to any one of claims 1 to 3, wherein the cluster interface card is specifically configured to:
select the at least one first serializer/deserializer interface or the at least one second serializer/deserializer interface based on target information, wherein the target information comprises at least one or more of the following: a data flow type of service data, an effective bandwidth of a current service, and a service type and a service priority of the service data.

5. The cluster interface card according to any one of claims 1 to 4, wherein the cluster interface card is further configured to:
disable a serializer/deserializer interface that is not selected in the plurality of first serializer/deserializer interfaces and/or the plurality of second serializer/deserializer interfaces.

6. The cluster interface card according to any one of claims 1 to 5, wherein a quantity of physical link buses of the second serializer/deserializer interface is greater than a quantity of physical link buses of the first serializer/deserializer interface; and the outputting the first service data through the at least one of the plurality of second serializer/deserializer interfaces further comprises:
outputting the first service data based on a part of physical link buses of the at least one second serializer/deserializer interface; and
in response to a fault of a target physical link bus in the part of physical link buses of the second serializer/deserializer interface, isolating the target physical link bus, and switching to an unused physical link bus of the second serializer/deserializer interface to output the first service data.

7. The cluster interface card according to any one of claims 1 to 6, wherein the cluster interface card is further configured to:
output cluster parameter information, wherein the cluster parameter information comprises at least one of the following: time information, clock information, and frame header information of a cluster in which the cluster interface card is located.

8. The cluster interface card according to any one of claims 1 to 7, wherein a data transmission rate of the first serializer/deserializer interface is greater than or equal to a data transmission rate of the second serializer/deserializer interface.

9. The cluster interface card according to claim 8, wherein the data transmission rate of the first serializer/deserializer interface is a first multiple of the data transmission rate of the second serializer/deserializer interface, and the quantity of physical link buses of the second serializer/deserializer interface is less than or equal to the first multiple of the quantity of physical link buses of the first serializer/deserializer interface.

10. The cluster interface card according to any one of claims 1 to 9, wherein a data transmission rate of each second serializer/deserializer interface is 53.125 Gbit/s.

11. A service forwarding device, comprising a plurality of service switching cards and a plurality of cluster interface cards, wherein each service switching card comprises a plurality of service switching fabrics; each cluster interface card comprises a forwarding switching chip, a plurality of first serializer/deserializer interfaces, and a plurality of second serializer/deserializer interfaces; the forwarding switching chip is separately connected to the plurality of corresponding first serializer/deserializer interfaces and the plurality of corresponding second serializer/deserializer interfaces; each first serializer/deserializer interface is connected to one service switching fabric in one service switching card; each service switching fabric is connected to the first serializer/deserializer interface of at least one cluster interface card; and the plurality of second serializer/deserializer interfaces are configured to be in communication connection to a target communication device, wherein each forwarding switching chip is configured to:
input first service data from a corresponding service switching fabric through any one of the plurality of first serializer/deserializer interfaces, and select at least one of the plurality of corresponding second serializer/deserializer interfaces to send the first service data to the target communication device; or receive, from any one of the plurality of corresponding second serializer/deserializer interfaces, second service data sent by the target communication device, and select at least one of the plurality of first serializer/deserializer interfaces to output the second service data.

12. The service forwarding device according to claim 11, wherein each cluster interface card is further configured to:
in response to a fault of a target service switching fabric in a target service switching card, isolate a target first serializer/deserializer interface, wherein the target first serializer/deserializer interface is a serializer/deserializer interface in the plurality of first serializer/deserializer interfaces that is in communication connection to the target service switching fabric.

13. The service forwarding device according to claim 11 or 12, wherein the selecting the at least one of the plurality of second serializer/deserializer interfaces to output the first service data comprises:
selecting the at least one of the plurality of second serializer/deserializer interfaces to output the first service data, wherein when two or more serializer/deserializer interfaces are selected to transmit the first service data, a difference between target data amounts transmitted by any two selected second serializer/deserializer interfaces is less than a preset threshold, and the target data amount is an amount of the first service data transmitted through each selected second serializer/deserializer interface.

14. The service forwarding device according to any one of claims 11 to 13, wherein the cluster interface card is specifically configured to:
select the at least one first serializer/deserializer interface or the at least one second serializer/deserializer interface based on target information, wherein the target information comprises at least one or more of the following: a data flow type of service data, an effective bandwidth of a current service, and a service type and a service priority of the service data.

15. The service forwarding device according to any one of claims 11 to 14, wherein the cluster interface card is further configured to:
disable a serializer/deserializer interface that is not selected in the plurality of first serializer/deserializer interfaces and/or the plurality of second serializer/deserializer interfaces.

16. The service forwarding device according to any one of claims 11 to 15, wherein a quantity of physical link buses of the second serializer/deserializer interface is greater than a quantity of physical link buses of the first serializer/deserializer interface; and the outputting the first service data through the at least one of the plurality of second serializer/deserializer interfaces further comprises:
outputting the first service data based on a part of physical link buses of the at least one second serializer/deserializer interface; and
in response to a fault of a target physical link bus in the part of physical link buses of the second serializer/deserializer interface, isolating the target physical link bus, and switching to an unused physical link bus of the second serializer/deserializer interface to output the first service data.

17. The service forwarding device according to any one of claims 11 to 16, wherein the service forwarding device further comprises a service interaction board controller; and the cluster interface card is further configured to:
output cluster parameter information to the service interaction board controller, wherein the cluster parameter information comprises at least one of the following: time information, clock information, and frame header information of a cluster in which the cluster interface card is located.

18. A service forwarding method, applied to a cluster interface card, wherein the cluster interface card comprises a plurality of first serializer/deserializer interfaces and a plurality of second serializer/deserializer interfaces, the plurality of first serializer/deserializer interfaces are configured to be in communication connection to a service switching card, and the plurality of second serializer/deserializer interfaces are configured to be in communication connection to a target communication device; and the method comprises:
inputting first service data through any one of the plurality of first serializer/deserializer interfaces, and selecting at least one of the plurality of second serializer/deserializer interfaces to output the first service data; or inputting second service data through any one of the plurality of second serializer/deserializer interfaces, and selecting at least one of the plurality of first serializer/deserializer interfaces to output the second service data.

19. The service forwarding method according to claim 18, wherein the method further comprises:
in response to a fault of a target service switching card, isolating a target first serializer/deserializer interface, wherein the target first serializer/deserializer interface is an interface in the plurality of first serializer/deserializer interfaces that is in communication connection to a faulty port of the target service switching card.

20. The service forwarding method according to claim 18 or 19, wherein the selecting the at least one of the plurality of second serializer/deserializer interfaces to output the first service data comprises:
selecting the at least one of the plurality of second serializer/deserializer interfaces to output the first service data, wherein when two or more serializer/deserializer interfaces are selected to transmit the first service data, a difference between target data amounts transmitted by any two selected second serializer/deserializer interfaces is less than a specific threshold, and the target data amount is an amount of the first service data transmitted through each selected second serializer/deserializer interface.

21. The service forwarding method according to any one of claims 18 to 20, wherein the selection comprises:
selecting the at least one first serializer/deserializer interface or the at least one second serializer/deserializer interface based on target information, wherein the target information comprises at least one or more of the following: a data flow type of service data, an effective bandwidth of a current service, and a service type and a service priority of the service data.

22. The service forwarding method according to any one of claims 18 to 21, wherein the method further comprises:
disabling a serializer/deserializer interface that is not selected in the plurality of first serializer/deserializer interfaces and/or the plurality of second serializer/deserializer interfaces.

23. The service forwarding method according to any one of claims 18 to 22, wherein a quantity of physical link buses of the second serializer/deserializer interface is greater than a quantity of physical link buses of the first serializer/deserializer interface; and the outputting the first service data through the at least one of the plurality of second serializer/deserializer interfaces further comprises:
outputting the first service data based on a part of physical link buses of the at least one second serializer/deserializer interface; and
in response to a fault of a target physical link bus in the part of physical link buses of the second serializer/deserializer interface, isolating the target physical link bus, and switching to an unused physical link bus of the second serializer/deserializer interface to output the first service data.

24. The service forwarding method according to any one of claims 18 to 23, wherein the method further comprises:
outputting cluster parameter information, wherein the cluster parameter information comprises at least one of the following: time information, clock information, and frame header information of a cluster in which the cluster interface card is located.

25. A cluster system, comprising a cluster switching device and a service forwarding device, wherein the cluster switching device comprises a plurality of central cluster switching boards, and each central cluster switching board comprises a plurality of cluster switching fabrics; and the service forwarding device comprises a plurality of service switching cards and a plurality of cluster interface cards, each service switching card comprises a plurality of service switching fabrics, and each cluster interface card comprises a forwarding switching chip, a plurality of first serializer/deserializer interfaces, and a plurality of second serializer/deserializer interfaces, wherein
each forwarding switching chip is separately connected to the plurality of corresponding first serializer/deserializer interfaces and the plurality of corresponding second serializer/deserializer interfaces, and each first serializer/deserializer interface is connected to one service switching fabric in one service switching card;
each service switching fabric is connected to the first serializer/deserializer interface of at least one cluster interface card, and the plurality of second serializer/deserializer interfaces of each cluster interface card are in communication connection to the cluster switching fabric in one or more central cluster switching boards through a cluster interface module; and
each forwarding switching chip is configured to: input first service data from a corresponding service switching fabric through any one of the plurality of first serializer/deserializer interfaces, and select at least one of the plurality of second serializer/deserializer interfaces to output the first service data to a corresponding central cluster switching board; or input second service data through any one of the plurality of second serializer/deserializer interfaces, and select at least one of the plurality of first serializer/deserializer interfaces to output the second service data to a corresponding service switching fabric.

26. A cluster system, comprising a target communication device and a service forwarding device, wherein the service forwarding device comprises a plurality of service switching cards and a plurality of cluster interface cards, the plurality of cluster interface cards are respectively connected to the plurality of service switching cards and the target communication device, and one or more of the plurality of cluster interface cards are the cluster interface cards according to any one of claims 1 to 10.

27. A computer-readable storage medium, wherein the computer-readable storage medium comprises instructions, and when the instructions are run on a processor, the processor is caused to perform the service forwarding method according to any one of claims 18 to 24.
